# EUROPEAN PATENT APPLICATION

(11) **EP 2 674 568 A1**
(43) Date of publication of application: **18.12.2013**
(21) Application number: 12171694.8
(22) Date of filing: 12.06.2012
(51) Int. Cl.: E21B 33/035, E21B 41/00, E21B 47/00, G01V 1/00

(54) **Monitoring environmental conditions of an underwater installation**

(71) Applicant: Vetco Gray Controls Limited, Bristol BS48 1BS (GB)
(72) Inventor: Simpson, Steven Lewis, Nailsea, Bristol BS48 1BS (GB); Gudivada, Gopalakrishna, Andhra Pradesh 522 503 (IN); Kunchakoori, Naresh, Andhra Pradeshi 502 032 (IN)
(74) Representative: Emerson, Peter James

(57) **Abstract**

An underwater installation comprises underwater control equipment (5) located in a body of water; a plurality of seismic sensors (6) located on the bed (B) of the body of water for monitoring conditions to which the equipment is subject; and means (4) for receiving and processing data from the sensors.

## Description

### Field of the Invention

This invention relates to monitoring environmental conditions of an underwater (for example subsea) facility.

### Background of the Invention

The effects of shock and vibration which exceed design limits can cause damage or destruction to equipment. Such damage can occur during abnormal operating conditions. It is essential therefore that sufficient safety precautions are taken to ensure that equipment is adequately protected against the effects of abnormal shock and vibration.

In oil and gas well production control systems, much of the equipment is installed subsea on the seabed and it is essential that such systems are protected against the effects of shock and vibration caused by extreme conditions, such as those arising due to earthquakes, tsunamis or nuclear explosions. A high level of protection must be built into such systems so that in the event of an incident, the well is shut down before any major damage is done.

The utilisation of vibration sensors already fitted with subsea electronics modules (SEMs) to sense shock and vibration conditions transmitted via the seabed, have proved unsatisfactory as the substantial vibrations at the well tree from the fluid extraction process tend to mask the seabed transmitted vibrations and shocks.

### Summary of the Invention

According to this invention from one aspect, there is provided an underwater installation comprising underwater control equipment located in a body of water; a plurality of seismic sensors located on the bed of the body of water for monitoring conditions to which the equipment is subject; and means for receiving and processing data from the sensors.

Typically, said equipment is located on said bed.

The installation could be a well facility, the equipment comprising control equipment for the facility. In this case, said equipment typically comprises a tree of the well facility, in which case said means for receiving and processing data could comprise an electronics module of a control module of the tree.

Where the installation comprises a well facility, said means for receiving and processing data could be arranged for causing the well to be shut down in response to given conditions to which said equipment is subject.

According to this invention from another aspect, there is provided a method of monitoring environmental conditions of an underwater installation comprising underwater control equipment located in a body of water, comprising providing a plurality of seismic sensors located on the bed of the body of water to monitor conditions to which the equipment is subject and receiving and processing data from the sensors.

An embodiment of the invention involves the deployment and installation of seismic sensors at strategic positions on the seabed adjacent to subsea equipment (for example a Christmas tree) to collect shock and vibration data to which the subsea equipment will be subjected in the event of abnormal conditions. This data can then be collected and transmitted to and processed in a subsea electronics module (SEM). A decision can be made in the SEM to shut down the well should predetermined parameters be exceeded without the need to transmit the data topside and await a shutdown decision. This approach will reduce the system shutdown time. Where appropriate, the sensors can be deployed remotely surrounding an oil or gas field to gather field seismic data and protect all subsea equipment associated with the field.

### Brief Description of the Drawings

Fig. 1 is a schematic diagram of an installation according to an embodiment of this invention; and
Fig. 2 shows schematically seismic sensors around a tree of the installation.

### Detailed Description of the Invention

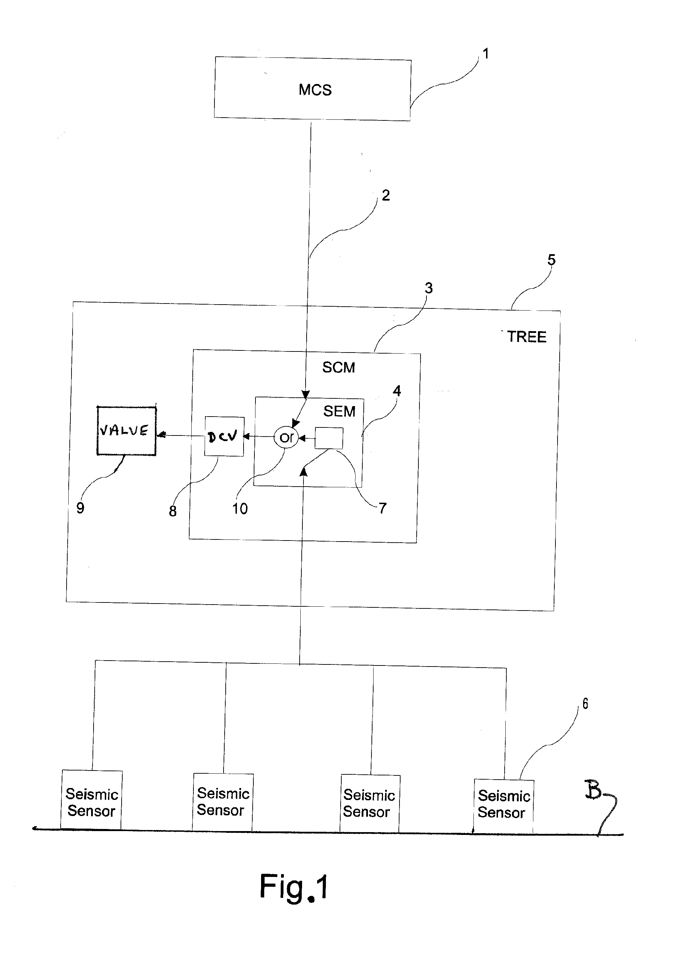

Referring to Fig. 1, the main components which make up a typical production control system in a subsea hydrocarbon production well facility include:
a master control station (MCS) 1, which provides the operator interface with subsea equipment and displays the current state of various items of the equipment, subsea valves and sensor information, enabling the operator to control the system;
an umbilical cable 2, which connects the MCS 1 to the subsea equipment installed on the seabed and incorporates a communication link which carries control signals to the equipment and transfers status information to the MCS 1;
a subsea control module (SCM) 3 which receives commands from the MCS 1 and controls all the subsea processes, provides the hydraulic power to actuate valves and transmits status data to the MCS 1;
a subsea electronics module (SEM) 4, housed within the SCM 3 and which is a microprocessor based electronics unit that houses a set of printed circuit boards, the functions of which include: communication with the MCS 1 (receiving control information from, and transmitting sensor data to the MCS 1); interfacing with subsurface sensors; and controlling valves and hydraulics; and
a Christmas tree 5 installed on the seabed, to which is fitted the SCM 3, housing the SEM 4, and providing the subsurface electric and hydraulic equipment needed to control the flow of fluid from the well.

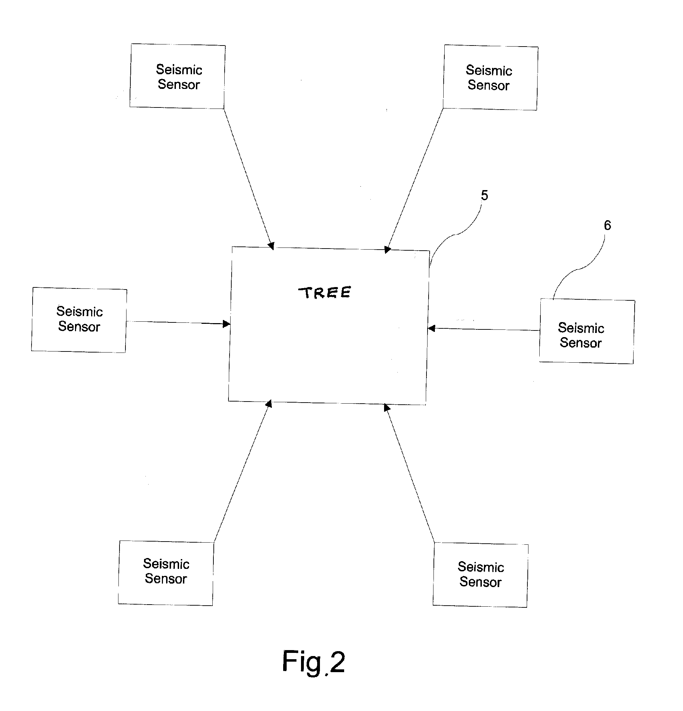

According to an embodiment of this invention, a set of seismic sensors 6 are installed, external to the equipment to be protected (such as the Christmas tree) and strategically placed around the subsea equipment as shown in Fig. 2 to collect data on the shock and vibration levels being transmitted through the seabed towards the subsea equipment.

The seismic sensors 6 transmit the shock and vibration data to the SEM 4 as shown in Fig. 1, which is a microprocessor based unit and includes a decision making process 7, typically by software control of a processor of the SEM. Thus, if process 7 detects that predetermined levels of shock and/or vibration, stored within the processor are exceeded, the SEM 4 outputs control of hydraulic directional control valves (DCVs) 8 within the SCM 3, which operate production fluid flow control valves 9 to shut down the well, without recourse to the MCS 1, only one DCV 8 and one valve 9 being shown for simplicity. In this way, the system shutdown time can be significantly reduced in the event of the shock and/or vibration limits being exceeded, because the sensing, decision and shutdown processes are in a local closed loop. Operation of well shut down, via the surface MCS 1, remains an alternative option as illustrated by the 'or' function 10.

### Advantages of using the Invention

This invention enables reduction or prevention of major damage to systems and equipment by a fast shutdown capability by the independence from surface control and enables a fast return to an operational state once the shock and/or vibration levels have returned to normal.

This invention would also be useful in other subsea applications such as subsea drilling control systems as well as production systems.

Reduced damage caused by shock and/or vibration results in reduced maintenance and repair costs and also in less loss of revenue due to shutdowns.

Improved protection against major catastrophes and abnormal operating conditions reduces the risk of loss of hydrocarbon fuel, environmental pollution and its inherent removal costs.

The invention can provide valuable information for preventative maintenance systems.

## Claims

1. An underwater installation comprising underwater control equipment located in a body of water; a plurality of seismic sensors located on the bed of the body of water for monitoring conditions to which the equipment is subject; and means for receiving and processing data from the sensors.

2. An installation according to claim 1, wherein said equipment is located on said bed.

3. An installation according to claim 1 or 2, wherein the installation is a well facility, the equipment comprising control equipment for the facility.

4. An installation according to claim 3, wherein said equipment comprises a tree of the well facility.

5. An installation according to claim 4, wherein said means for receiving and processing data comprises an electronics module of a control module of the tree.

6. An installation according to any of claims 3 to 5, wherein said means for receiving and processing data is arranged for causing the well to be shut down in response to given conditions to which said equipment is subject.

7. An installation according to any of claims 3 to 6, wherein said well facility is a hydrocarbon production well facility.

8. A method of monitoring environmental conditions of an underwater installation comprising underwater control equipment located in a body of water, comprising providing a plurality of seismic sensors located on the bed of the body of water to monitor conditions to which the equipment is subject and receiving and processing data from the sensors.

9. A method according to claim 8, wherein said equipment is located on said bed.

10. A method according to claim 8 or 9, wherein the installation is a well facility, the equipment comprising control equipment for the facility.

11. A method according to claim 10, wherein said equipment comprises a tree of the well facility.

12. A method according to claim 11, wherein said data is received and processed by an electronics module of a control module of the tree.

13. A method according to any of claims 10 to 12, wherein the well is shut down in response to the received and processed data being indicative of given conditions to which said equipment is subject.

14. A method according to any of claims 10 to 13, wherein said well facility is a hydrocarbon production well facility.
